(19) Europäisches Patentamt
European Patent Office
Office européen des brevets

(11) Veröffentlichungsnummer : **0 123 092**
**B1**

(12) # EUROPÄISCHE PATENTSCHRIFT

(45) Veröffentlichungstag der Patentschrift : **28.05.86**

(51) Int. Cl.⁴ : **A 01 N 33/04**, C 07 C 87/32, C 07 C 87/45

(21) Anmeldenummer : **84102630.5**

(22) Anmeldetag : **10.03.84**

(54) **Fungizide Mittel, enthaltend trans-3-(4-tert.-Alkylcyclohexyl-1)-2-methyl-1-dialkylaminopropane und ihre Verwendung zur Bekämpfung von Pilzen.**

(30) Priorität : **18.03.83 DE 3309720**

(43) Veröffentlichungstag der Anmeldung : **31.10.84 Patentblatt 84/44**

(45) Bekanntmachung des Hinweises auf die Patenterteilung : **28.05.86 Patentblatt 86/22**

(84) Benannte Vertragsstaaten : **AT BE CH DE FR GB IT LI NL SE**

(56) Entgegenhaltungen :
**EP-A- 0 006 992**
**EP-A- 0 019 769**
**EP-A- 0 040 740**
**US-A- 4 202 894**
**US-A- 4 241 058**

(73) Patentinhaber : **BASF Aktiengesellschaft**
**Carl-Bosch-Strasse 38**
**D-6700 Ludwigshafen (DE)**

(72) Erfinder : **Pommer, Ernst Heinrich, Dr.**
**Berliner Platz 7**
**D-6703 Limburgerhof (DE)**
Erfinder : **Ammermann, Eberhard, Dr.**
**Sachsenstrasse 3**
**D-6700 Ludwigshafen (DE)**
Erfinder : **Himmele, Walter, Dr.**
**Eichenweg 14**
**D-6909 Walldorf (DE)**

**EP 0 123 092 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue fungizide Mittel, die trans-3-(4-tert.-Alkylcyclohexyl-1)-2-methyl-1-dialkylaminopropane enthalten sowie deren Verwendung bei der Bekämpfung von Pilzen.

Es ist bekannt, N-Tridecyl-2,6-dimethylmorpholin oder seine Salze (z. B. das Acetat oder das Salz der Dodecylbenzolsulfonsäure) als Fungizide zu verwenden (DE-1 164 152, DE-1 173 722). Die EP-A1-0 019 769 betrifft ein Fungizid für den Pflanzenschutz, das die trans-Verbindung oder ihr Salz einer 3-(p-tertiar-Butylcyclohexyl)-2-methyl-propanverbindung enthält, die in 1-Stellung mit dem Stickstoffatom eines stickstoffhaltigen Heterocyclus verbunden ist.

Es wurde nun gefunden, daß fungizide Mittel, die trans-3-(4-tert.-Alkyl-cyclohexyl-1)-2-methyl-1-dialkylaminopropane der Formel I enthalten

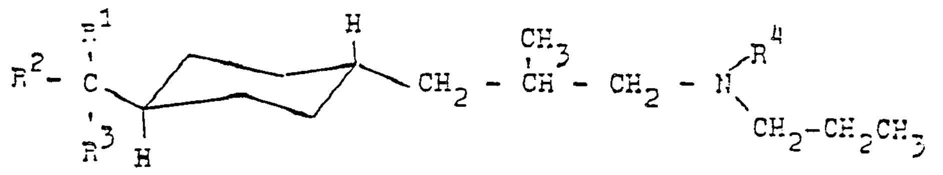

(I)

in der

$R^1$, $R^2$ und $R^3$ gleich oder verschieden sind und $C_{1-4}$-Alkylreste bedeuten, wobei auch zwei der Reste $R^1$, $R^2$ und $R^3$ zusammen einen Cyclopentyl-oder Cyclohexylrest bilden können, und

$R^4$ einen Ethyl- oder n-Propylrest bedeutet,

sowie deren für Pflanzen verträgliche Salze, gute fungizide Wirkungen haben, die der Wirkung der bekannten Produkte überlegen ist.

In den trans-Verbindungen liegen die Substituenten am Cyclohexylring in der äquatorialen Stellung.

Als Reste $R^1$, $R^2$ und $R^3$ kommen insbesondere Methylgruppen in Betracht. $R^4$ ist vorzugsweise n-Propyl. Zur Herstellung von Pflanzen-verträglichen Salzen eignen sich beispielsweise organische Carbonsäuren oder anorganische Säuren, wie Salpetersäure, Salzsäure, Bromwasserstoffsäure, Jodwasserstoffsäure, Schwefelsäure, Phosphorsäure, Essigsäure, Propionsäure, Milchsäure, Bernsteinsäure, Weinsäure, Fumarsäure, Oxalsäure, Zitronensäure, Benzoesäure, Salicylsäure oder Nicotinsäure. Bevorzugt werden die anorganischen Säuren, insbesondere Salzsäure.

Die neuen Verbindungen werden hergestellt, indem man Verbindungen der Formel II

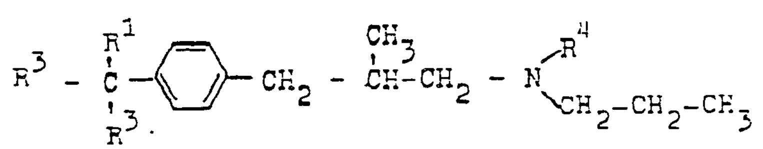

(II)

worin $R^1$, $R^2$, $R^3$ und $R^4$ die oben genannten Bedeutungen haben, hydriert, das so erhaltene Isomerengemisch in die Isomeren trennt und die so erhaltenen Verbindungen gegebenenfalls in ihre für Pflanzen-verträgliche Salze überführt.

Die Hydrierung der Verbindungen II erfolgt am günstigsten bei 20 bis 200 °C und einem Wasserstoffdruck von 1 bis 300 bar. Als Katalysatoren eignen sich besonders Ruthenium und Palladium. Die Hydrierung erfolgt zweckmäßig in einem Lösungsmittel wie Dioxan, Isopropanol oder Eisessig. Es empfiehlt sich, die Wasserstoffaufnahme mit Hilfe des Protonenresonanzspektrums zu kontrollieren. Ist die Wasserstoffaufnahme komplett, wird das Reaktionsgemisch über eie Destillationskolonne mit etwa 40 bis 70 theoretische Trennstufen bei 10 bis 40 mbar und einem Rücklaufverhältnis von 1 : 1 bis 1 : 20 fraktioniert destilliert. Die Destillation liefert die gewünschten Produkte in einer solchen Reinheit (über 98,5 %), daß sie direkt zur Herstellung der fungiziden Mittel eingesetzt werden können. Die Wirkstoffe, bei denen die Substituenten in der Stellung äquatorial-äquatorial am Cyclohexylrest stehen, sieden höher als die entsprechenden in der äquatorial-axial-Stellung.

Die Verbindungen sind einfach herstellbar. Die destillative Trennung kann bei geringem Vakuum erfolgen, so daß kleine Apparaturen verwendet werden können. Bei der Destillation werden die Isomeren sauber getrennt und es treten nur kleine Übergangsfraktionen auf. Außerdem kann die Destillation schnell durchgeführt werden.

Beispiel 1

A. Herstellung des Ausgangsmaterials

Zu 1 428 g 3-(4'-tert.-Butylphenyl)-2-methylpropanal und 707 g Di-n-propylamin wurden unter Rühren im Verlauf von 19 h 401 g 98 %ige Ameisensäure so zugegeben, daß keine starke Schaumbildung auftrat.

Das entstandene $CO_2$ entwich über einen Rückflußkühler. Das so erhaltene Reaktionsgemisch wurde einer Kurzwegdestillation unterworfen, wobei man 1 950 g Destillat erhielt, welches bei 110-180 °C/0,6 mbar überging. Dieses wurde über eine Kolonne fraktioniert destilliert. Die bei 0,4 mbar und bis 136 °C übergehende Fraktion bestand aus 97 %igem 3-(4'-tert.-Butylphenyl)-2-methyl-1-di-n-propylaminopropan. Die Ausbeute betrug 1 890 g.

B. Herstellung und Isolierung des Endprodukts

a) 1 050 g des gemäß A erhaltenen Produkts wurden in 2 000 ml Isopropanol in einem Autoklaven bei 100-140 °C und einem Wasserstoffdruck von 100 bis 140 bar unter Rühren hydriert. Als Katalysator diente 1 g Rutheniumoxidhydrat. Nach 44 h wurde das Reaktionsprodukt mit 25 g Aktivkohle gerührt und filtriert. Das Filtrat wurde eingeengt und anschließend einer Kurzwegdestillation unterworfen.

Das bei 125-135 °C/0,6 mbar übergehende Produkt (1 020 g) wurde an einer Kolonne fraktioniert destilliert.

b) Das gemäß a) erhaltene Produkt, das aus 56,2 % cis- und 43,8 % trans-1,4-Cyclohexanderivat bestand, wurde in einer mit Edelstahldrahtnetzwendeln gefüllten Kolonne (Höhe : 160 cm ; Weite : 2,9 cm) bei einem Druck von 37 bar fraktioniert. Am Kolonnenkopf wurde ein Ablauf-Rücklauf-Verhältnis von 1 : 10 eingestellt. Bis zu einer Temperatur von 195 °C erhielt man 439 g eines Produktes, welches zu 96,5 % aus dem cis-Derivat bestand. Bei 195-198 °C destillierten 331 g einer Übergangsfraktion über, die 47,2 % cis- und 52,7 % trans-Derivat enthielt. Bei 198 °C ging anschließend trans-3-(4'-tert.-Butylcyclohexyl-1')-2-methyl-1-(N-di-n-propylamino)-propan über. Die Destillation wurde ohne Kolonnenkopf zu Ende geführt. Das Produkt (250 g) war zu 99,8 % rein.

Durch Wiederverwenden der Übergangsfraktion in den nächsten Destillationsansätzen ließ sich die Ausbeute auf 96,5 % steigern.

Wegen der geringen Unterschiede in den Siedepunkten der cis- und trans-Verbindung muß die Destillation gaschromatographisch überwacht werden.

## Beispiel 2

29,5 g der gemäß Beispiel 1 erhaltenen trans-Verbindung wurden in 65 ml heißem Ethanol mit Fumarsäure versetzt. Beim Abkühlen kristallisierten 29 g Hydrogenfumarat aus, Fp. = 127-132 °C.

Analog wurden hergestellt bzw. lassen sich herstellen :

3. trans-3-(4-tert.-Butylcyclohexyl-1)-2-methyl-1-(N-ethyl-N-n-propyl-amino)-propan, Kp : 187/33 mbar.

4. trans-3-[4-(1,1-Dimethyl-n-propyl)-cyclohexyl-1)]-2-methyl-1-(N-ethyl-N-n-propylamino)-propan.

5. trans-3-[4-(1-Methylcyclopentyl-1)-cyclohexyl-1)]-2-methyl-(N-di-n-propylamino)-propan.

6. Hydrobromid der gemäß Beispiel 1 erhaltenen trans-Verbindung, Fp. 141-147 °C.

7. Oxalat der gemäß Beispiel 1 erhaltenen trans-Verbindung, Fp. 147 °C.

8. Hydrojodid der gemäß Beispiel 1 erhaltenen trans-Verbindung, Fp. 142-146 °C.

Die Wirkstoffe und ihre Salze zeichnen sich durch eine hervorragende Wirksamkeit gegen ein breites Spektrum von pflanzenpathogenen Pilzen, insbesondere aus der Klasse der Ascomyceten und Basidiomyceten, aus. Sie sind zum Teil systemisch wirksam und können als Blatt- und Bodenfungizide eingesetzt werden. Ferner können sie auch im Materialschutz verwendet werden.

Besonders interessant sind die fungiziden Verbindungen für die Bekämpfung einer Vielzahl von Pilzen an verschiedenen Pflanzen, z. B. Kulturpflanzen, oder ihren Samen, insbesondere Weizen, Roggen, Gerste, Hafer, Reis, Mais, Baumwolle, Soja, Kaffee, Bananen, Erdnüsse, Zuckerrohr, Obst und Zierpflanzen im Gartenbau sowie Gemüse — wie Gurken, Bohnen und Kürbisgewächse.

Die Wirkstoffe sind insbesondere geeignet zur Bekämpfung folgender Pflanzenkrankheiten :

Erysiphe graminis (echter Mehltau) in Getreide,
Erysiphe cichoracearum (echter Mehltau) an Kürbisgewächsen,
Podosphaera leucotricha an Äpfeln,
Uncinula necator an Reben,
Erysiphe polygoni an Bohnen,
Sphaerotheca pannosa an Rosen,
Puccinia-Arten an Getreide,
Rhizoctonia solani an Baumwolle sowie,
Helminthosporiumarten an Getreide,
Ustilago-Arten an Getreide und Zuckerrohr,
Rhynchosporium secale an Getreide,
Venturia inaequalis (Apfelschorf),
Pseudocercosporella herpotrichoides an Getreide.

Die Verbindungen werden angewendet, indem man die Pflanzen mit den Wirkstoffen besprüht oder

bestäubt oder die Samen der Pflanzen mit den Wirkstoffen behandelt. Die Anwendung erfolgt vor oder nach der Infektion der Pflanzen oder Samen durch die Pilze.

Die Wirkstoffe können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwecken ; sie sollten in jedem Fall eine feine und gleichmäßige Verteilung der wirksamen Substanz gewährleisten. Die Formulierungen werden in bekannter Weise hergestellt, z. B. durch Verstrecken des Wirkstoffs mit Lösungsmitteln und/oder Trägerstoffen, gegebenenfalls unter Verwendung von Emulgiermitteln und Dispergiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage :

Lösungsmittel wie Aromaten (z. B. Xylol, Benzol), chlorierte Aromaten (z. B. Chlorbenzole), Paraffine (z. B. Erdölfraktionen), Alkohole (z. B. Methanol, Butanol), Amine (z. B. Ethanolamin, Dimethylformamid) und Wasser ; Trägerstoffe wie natürliche Gesteinsmehle (z. B. Kaoline, Tonerden, Talkum, Kreide) und synthetische Gesteinsmehle (z. B. hochdisperse Kieselsäure, Silikate) ; Emulgiermittel wie nichtionogene und anionische Emulgatoren (z. B. Polyoxyethylen-Fettalkohol-Ether, Alkylsulfonate und Arylsulfonate) und Dispergiermittel, wie Lignin, Sulfitablaugen und Methylcellulose.

Die fungiziden Mittel enthalten in allgemeinen zwischen 0,1 und 95, vorzugsweise zwischen 0,5 und 90 Gew.-% Wirkstoff.

Die Aufwandmengen liegen je nach Art des gewünschten Effektes zwischen 0,1 und 3 kg Wirkstoff oder mehr je ha.

Die Wirkstoffe können auch als fungizid wirksame Bestandteile zum Schutz von Materialien, z. B. in Form öliger Holzschutzmittel zum Schutz von Holz gegen holzzerstörende Pilze eingesetzt werden. Folgende holzzerstörende Pilze lassen sich beispielsweise mit den erfindungsgemäßen Wirkstoffen bekämpfen :

Merulius lacrimans, Coniophora puteana, Lentinus lepideus, Lenzites trabea, Trametes versicolor, Stereum hirsutum, Fomos annosus.

Die Wirkstoffe können in Zubereitungen, wie Lösungen, Emulsionen, Pasten und Öldispersionen oder Wundverschlußmitteln, angewendet werden. Diese Zubereitungen enthalten beispielsweise 0,25 bis 50 % Wirkstoff. Die Aufwandmengen betragen je nach Art des gewünschten Effektes 0,5 bis 8 g Wirkstoff je $m^2$ zu schützender Holzoberfläche bzw. 50 bis 4 000 g Wirkstoff/$m^3$ Holz. Anstrichfarben enthalten beispielsweise 0,5 bis 2 Gew.-% Wirkstoff. Zum Schutz von Holzwerkstoffen können die Wirkstoffe als Emulsion oder im Untermischverfahren dem Klebstoff beispielsweise in Mengen von 2 bis 6 Gew.-% zugesetzt werden.

Die Anwendung der Wirkstoffe auf Holz erfolgt beispielsweise durch Streichen, Spritzen, Sprühen, Tauchen oder Druckimprägnierungs- oder Diffusionsverfahren.

Die Mittel bzw. die daraus hergestellten gebrauchsfertigen Zubereitungen wie Lösungen, Emulsionen, Suspensionen, Pulver, Stäube, Pasten oder Granulate werden in bekannter Weise angewendet, im Pflanzenschutz beispielsweise durch Versprühen, Vernebeln, Verstäuben, Verstreuen, Beizen oder Gießen.

Beispiele für Zubereitungen zind :

I. Man vermischt 90 Gewichtsteile der Verbindung 1 mit 10 Gewichtsteilen N-Methyl-alpha-pyrrolidon und erhält eine Lösung, die zur Anwendung in Form kleinster Tropfen geeignet ist.

II. 10 Gewichsteile der Verbindung 2 werden in einer Mischung gelöst, die aus 90 Gewichtsteilen Xylol, 6 Gewichtsteilen des Anlagerungsproduktes von 8 bis 10 Mol Ölsäure-N-monoethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht. Durch Eingießen in Wasser erhält man eine wäßrige Dispersion.

III. 20 Gewichtsteile der Verbindung 4 werden in einer Mischung gelöst, die aus 60 Gewichtsteilen Cyclohexanon, 30 Gewichtsteilen Isobutanol, 10 Gewichtsteilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

IV. 20 Gewichsteile der Verbindung 6 werden in einer Mischung gelöst, die aus 25 Gewichtsteilen Cyclohexanon, 65 Gewichtsteilen einer Mineralölfraktion vom Siedepunkt 210 bis 280 °C und 10 Gewichtsteilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

V. 80 Gewichtsteile der Verbindung 7 werden mit 3 Gewichtsteilen des Natriumsalzes der Diisobutylnaphthalin-alpha-sulfonsäure, 10 Gewichtsteilen des Natriumsalzes einer Ligninsulfonsäure aus einer Sulfitablauge und 7 Gewichtsteilen pulverförmigem Kieselsäuregel gut vermischt und in einer Hammermühle vermahlen. Durch feines Verteilen der Mischung in Wasser erhält man eine Spritzbrühe.

VI. 3 Gewichtsteile der Verbindung 2 werden mit 97 Gewichtsteilen feinteiligem Kaolin innig vermischt. Man erhält auf diese Weise ein Stäubemittel, das 3 Gew. % des Wirkstoffs enthält.

VII. 30 Gewichtsteile der Verbindung 1 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 40 Gewichtsteile der Verbindung 4 werden mit 10 Teilen Natriumsalz eines Phenolsulfonsäure-harnstoff-formaldehyd-Kondensates, 2 Teilen Kieselgel und 48 Teilen Wasser innig vermischt. Man erhält eine stabile wäßrige Dispersion. Durch Verdünnen mit Wasser erhält man eine wäßrige Dispersion.

IX. 20 Teile der Verbindung 2 werden mit 2 Teilen Calciumsalz der Dodecylbenzolsulfonsäure, 8 Teilen Fettalkoholpolyglykolether, 2 Teilen Natriumsalz eines Phenolsulfonsäure-harnstoff-formaldehyd-Kondensates und 68 Teilen eines paraffinischen Mineralöls innig vermischt. Man erhält eine stabile ölige Dispersion.

X. Zur Herstellung eines öligen Holzschutzmittels mit 1 % (Gew. %) Wirkstoff wird zunächst 1 Teil (Gewichtsteil) der Verbindung 22 unter leichtem Erwärmen in 55 Teilen einer aromatenreichen Benzinfraktion gelöst. Anschließend werden 10 Teile eines Alkydharzes zugefügt und bei Raumtemperatur mit Testbenzin auf 100 Teile ergänzt.

In entsprechender Weise werden ölige Holzschutzmittel mit 0,25 bis 5 Gew.% Wirkstoff 1 hergestellt.

Zur Herstellung wasserabweisender Imprägnieranstriche können den öligen Holzschutzmitteln sog. « water repellents » zugesetzt werden. Geeignete Substanzen sind beispielsweise Zinkstearat, Aluminiumstearat, Wachse. Ferner können zur Erzielung von Farbeffekten feinteilige anorganische oder organische Pigmente oder öllösliche Farbstoffe in die Formulierungen eingearbeitet werden.

Zum Schutz des Holzes gegen Pilzbefall werden üblicherweise 50 bis 200 ml der in Beispiel X angeführten öligen Holzschutzmittel je $m^2$ Holzoberfläche durch Streichen, Spritzen oder Tauchen aufgebracht.

Die neuen Mittel können in diesen Anwendungsformen auch zusammen mit anderen Wirkstoffen vorliegen, wie z. B. Herbiziden, Insektiziden, Wachstumsregulatoren und Fungiziden, oder auch mit Düngemitteln vermischt und ausgebracht werden. Beim Vermischen mit Fungiziden erhält man dabei in vielen Fällen eine Vergrößerung des fungiziden Wirkungsspektrums.

Die folgende Liste von Fungiziden, mit denen die Wirkstoffe kombiniert werden können, soll die Kombinationsmöglichkeiten erläutern, nicht aber einschränken.

Fungizide, die mit den Wirkstoffen kombiniert werden können, sind beispielsweise :

Schwefel,
Dithiocarbamate und deren Derivate, wie
Ferridimethyldithiocarbamat,
Zinkdimethyldithiocarbamat,
Mangan-Zink-ethylendiamin-bis-dithiocarbamat und
Zinkethylenbisdithiocarbamat,
Tetramethylthiuramdisulfide,
Ammoniak-Komplex von Zink-(N,N-ethylen-bis-dithiocarbamat)
und N,N'-Polyethylen-bis-(thiocarbamoyl)-disulfid,
Zink-(N,N'-propylen-bis-dithiocarbamat),
Ammoniak-Komplex von Zink-(N,N'-propylen-bis-dithiocabamat)
und N,N'-Polypropylen-bis-(thiocarmanoyl)-disulfid ;

Nitroderivate, wie
Dinitro-(1-methylheptyl)-phenylcrotonat,
2-sec.-Butyl-4,6-dinitrophenyl-3,3-dimethylacrylat,
2-sec.-Butyl-4,6-dinitrophenyl-isopropylcarbonat ;

heterocyclische Substanzen, wie
N-(1,1,2,2-Tetrachlorethylthio)-tetrahydrophthalimid,
N-Trichlormethylthio-tetrahydrophthalimid,
2-Heptadecyl-2-imidazolin-acetat,
2,4-Dichlor-6-(o-chloranilino)-s-triazin,
O,O-Diethyl-phthalimidophonothioat,
5-Amino-1-(bis-(dimethylamino)-phosphinyl)-3-phenyl-1,2,4-triazol),
2,3-Dicyano-1,4-Dithioanthrachinon,
2-Thio-1,3-dithio-(4,5-b)-chinoxalin,
1-(Butylcarbamoyl)-2-benzimidazol-carbaminsäuremethylester,
4-(2-Chlorphenylhydrazono)-3-methyl-5-isoxazolon,
Pyridin-2-thio-1-oxid,
8-Hydroxychinolin bzw. dessen Kupfersalz,
2,3-Dihydro-5-carboxanilido-6-methyl-1,4-oxathiin-4,4-dioxid,
2,3-Dihydro-5-carboxanilido-6-methyl-1,4-oxathiin,
2-(Furyl-(2))-benzimidazol,
Piperazin-1,4-diylbis-(1-(2,2,2-trichlor-ethyl)-formamid,
2-(Thiazolyl-(4))-benzimidazol,
5-Butyl-2-dimethylamino-4-hydroxy-6-methyl-pyrimidin,
Bis-(p-chlorphenyl)-3-pyridinmethanol,

1,2-Bis-(3-ethoxycarbonyl-2-thioureido)-benzol,
1,2-Bis-(3-methoxycarbonyl-2-thioureido)-benzol,

sowie verschiedene Fungizide, wie

Dodecylguanidinacetat,
3-(3-(3,5-Dimethyl-2-oxycyclohexyl)-2-hydroxyethyl)-glutarimid,
Hexachlorbenzol,
N-Dichlorfluormethylthio-N',N'-dimethyl-N-phenyl-schwefelsäurediamid,
2,5-Dimethyl-furan-3-carbonsäureanilid,
2-Methyl-benzoesäure-anilid,
2-Jod-benzoesäure-anilid,
1-(3,4-Dichloranilino)-1-formylamino-2,2,2-trichlorethan,
2,6-Dimethyl-N-tridecyl-morpholin bzw. dessen Salze,
2,6-Dimethyl-N-cyclododecyl-morpholin bzw. dessen Salze,
DL-Methyl-N-(2,6-dimethyl-phenyl)-N-furoyl(2)-alaninat,
DL-N-(2,6-Dimethyl-phenyl)-N-(2'-methoxyacetyl)-alanin-methylester,
5-Nitro-isophthalsäure-di-isopropylester,
1-(1',2',4'-Triazolyl-1')-[1-(4'-chlorphenoxy)]-3,3-dimethylbutan-2-on,
1-(1',2',4'-Triazolyl-1')-[1-(4'-chlorphenoxy)]-3,3-dimethylbutan-2-ol,
N-(2,6-Dimethylphenyl)-N-chloracetyl-D,L-2-aminobutyrolacton,
N-(n-Propyl)-N-(2,4,6-trichlorphenoxyethyl)-N'-imidazolyl-harnstoff,
N-Cyclohexyl-N-methoxy-2,5-dimethyl-furan-3-carbonsäureamid,
2,4,5-Trimethyl-furan-3-carbonsäureanilid,
5-Methyl-5-vinyl-3-(3,5-dichlorphenyl)-2,4-dioxo-1,3-oxazolidin,
5-Methoxymethyl-5-methyl-3-(3,5-dichlorphenyl)-2,4-dioxo-1,3-oxazolidin,
N-[3-(p-tert.-Butylphenyl)-2-methyl-propyl]-cis-2,6-dimethylmorpholin,
N-Formyl-N-morpholin-2,2,2-trichlorethylacetal,
1-[2-(2,4-Dichlorphenyl)-4-ethyl-1,3-dioxolan-2-yl-methyl]-1H-1,2,4-triazol,
1-[2-(2,4-Dichlorphenyl)-4-n-propyl-1,3-dioxolan-2-yl-methyl]-1H-1,2,4-triazol.

Bei Verwendung im Holzschutz sind Mischungen mit folgenden Verbindungen als besonders günstig anzusehen :

Organozinnverbindungen, wie Tributylzinnoxid und Tributylzinnbenzoat,
Methylenbisthiocyanat,
Alkyl-dimethyl-benzylammoniumchlorid,
Cetyl-pyridiniumchlorid,
Chlorierte Phenole, wie Mercaptobenzthiazol, Tetra- und Pentachlorphenol,
Tetrachlorisophthalsäure-dinitril,
2-Halogenbenzoesäureanilid,
N-Cyclohexyl-N-methoxy-2,5-dimethyl-furan-3-carbonsäureamid,
22,4,5-Trimethyl-furan-3-carbonsäureanilid,
Benzimidazol-2-carbaminsäure-methylester,
2-Thiocyanomethyl-thiobenzothiazol,
Kupfernaphthenat,
Kupfer-8-oxychinolin,
Alkali- und Metallsalze des N-Hydroxy-N-cyclohexyl-diazeniumoxide,
p-Chlorphenyl-3-propargyl-formal,
3-Jod-2-propynyl-butyl-carbamat,
N-Dichlorfluormethylthio-N',N'-dimethyl-N-phenyl-schwefelsäurediamid.

Die folgenden Versuche erläutern die fungizide Wirkung. Dabei wurden die folgenden bekannten Wirkstoffe zum Vergleich verwendet.

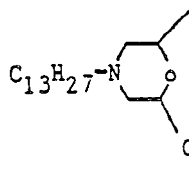

A

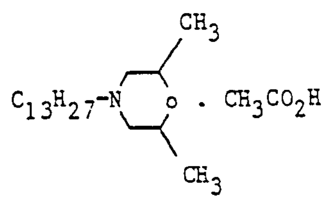

B

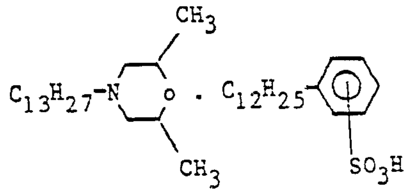

C

Versuch 1

Wirksamkeit gegen Weizenmehltau

Blätter von in Töpfen gewachsenen Weizenkeimlingen der Sorte « Jubilar » werden mit wäßriger Spritzbrühe, die 80 % (Gewichtsprozent) Wirkstoff und 20 % Emulgiermittel in der Trockensubstanz enthält, besprüht und 24 Stunden nach dem Antrocknen des Spritzbelages mit Oidien (Sporen) des Weizenmehltaus (Erysiphe graminis var. tritici) bestäubt. Die Versuchspflanzen werden anschließend im Gewächshaus bei Temperaturen zwischen 20 und 22 °C und 75 bis 80 % relativer Luftfeuchtigkeit aufgestellt. Nach 7 Tagen wird das Ausmaß der Mehltauentwicklung ermittelt.

Das Ergebnis des Versuches zeigt, daß beispielsweise die Verbindungen 6, 7 und 8 bei der Anwendung als 0,025 oder 0,006 %ige Spritzbrühe eine bessere fungizide Wirkung (z. B. 100 %) zeigen als die bekannten Wirkstoffe A, B und C (z. B. 70 %).

Versuch 2

Wirksamkeit gegen Weizenbraunrost

Blätter von in Töpfen gewachsenen Weizensämlingen der Sorte « Jubilar » werden mit Sporen des Braunrostes (Puccinia recondita) bestäubt. Danach werden die Töpfe für 24 Stunden bei 20 bis 22 °C in eine Kammer mit hoher Luftfeuchtigkeit (90 bis 95 %) gestellt. Während dieser Zeit keimen die Sporen aus und die Keimschläuche dringen in das Blattgewebe ein. Die infizierten Pflanzen werden anschließend mit wäßrigen Spritzbrühen, die 80 % Wirkstoff und 20 % Emulgiermittel in der Trockensubstanz enthalten, tropfnaß gespritzt. Nach dem Antrocknen des Spritzbelages werden die Versuchspflanzen im Gewächshaus bei Temperaturen zwischen 20 und 22 °C und 65 bis 70 % relativer Luftfeuchte aufgestellt. Nach 8 Tagen wird das Ausmaß der Rostpilzentwicklung auf den Blättern ermittelt.

Das Ergebnis des Versuches zeigt, daß beispielsweise die verbindungen 1, 2, 6, 7 und 8 bei der Anwendung als 0,025 %ige Spritzbrühe eine bessere fungizide Wirkung zeigen (z. B. 90 %) als die bekannten Wirkstoffe A, B und C (z. B. 50 %).

**Patentansprüche**

1. Fungizides Mittel für den Material- oder Pflanzenschutz, enthaltend ein trans-3-(4-tert.-Alkylcyclohexyl-1)-2-methyl-1-dialkylaminopropan der Formel I

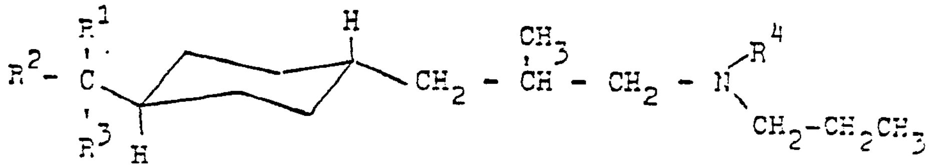

(I)

in der

$R^1$, $R^2$ und $R^3$ gleich oder verschieden sind und $C_{1-4}$-Alkylreste bedeuten, wobei auch zwei der Reste $R^1$, $R^2$ und $R^3$ zusammen einen Cyclopentyl- oder Cyclohexylrest bilden können, und

$R^4$ einen Ethyl- oder n-Propylrest bedeutet, oder deren für Pflanzen verträgliche Salze.

2. Fungizides Mittel für den Material- oder Pflanzenschutz, enthaltend eine Verbindung der Formel I gemäß Anspruch 1 und einen festen oder flüssigen Trägerstoff.

3. Verfahren zur Bekämpfung von Pilzen, außer humanpathogenen Pilzen, dadurch gekennzeichnet, daß man eine fungizid wirksame Menge einer Verbindung der Formel I gemäß Anspruch 1 auf durch Pilzbefall bedrohte Materialien, Flächen, Pflanzen, Saatgüter oder auf die Pilze einwirken läßt.

4. Fungizides Mittel nach Anspruch 1, enthaltend trans-3-(4-tert.-Alkyl-cyclohexyl-1)-2-methyl-1-(N-di-n-propylamino)-propan oder sein pflanzenverträgliches Salz.

**Claims**

1. A fungicidal agent for protecting materials or plants, comprising a trans-3-(4-tert.-alkylcyclohex-1-yl)-2-methyl-1-dialkylaminopropane of the formula I

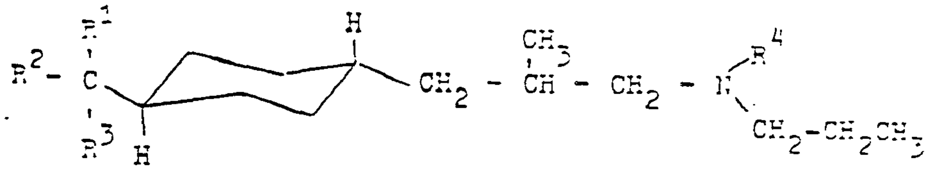

(I)

where

$R^1$, $R^2$ and $R^3$ are identical or different and each denotes $C_1$-$C_4$-alkyl, it also being possible for two of the radicals $R^1$, $R^2$ and $R^3$ together to form a cyclopentyl or cyclohexyl radical, and

$R^4$ is ethyl or n-propyl,

or its plant-tolerated salts.

2. A fungicidal agent for protecting materials or plants, comprising a compound of the formula I as claimed in claim 1 and a solid or liquid carrier.

3. A process for combating fungi, except human-pathogenic fungi, wherein a fungicidally effective amount of a compound of the formula I as claimed in claim 1 is allowed to act on the materials, areas, plants or seed threatened by fungal attack, or on the fungi.

4. A fungicidal agent as claimed in claim 1, comprising trans-3-(4-tert.-alkylcyclohex-1-yl)-2-methyl-1-(N-di-n-propylamino)-propane or a plant-tolerated salt thereof.

## Revendications

1. Agent fongicide, pour la protection des matériaux ou des plantes, contenant un trans-3-(4-tert. alkylcycloxhexyl-1)-2-méthyl-1-dialkylaminopropane de formule I

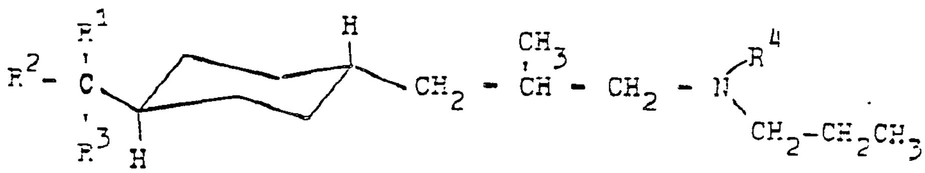

(I)

dans laquelle

$R^1$, $R^2$ et $R^3$ sont identiques ou différents et représentent des restes alkyle en $C_{1-4}$, deux des restes $R^1$, $R^2$ et $R^3$ pouvant aussi former ensemble un reste cyclopentyle ou cyclohexyle, et

$R^4$ représente un reste éthyle ou n-propyle, ou leurs sels acceptables pour les plantes.

2. Agent fongicide, pour la protection des matériaux ou des plantes, contenant un composé de formule I selon la revendication 1 et un support solide ou liquide.

3. Procédé de lutte contre les champignons, sauf les champignons humanopathogènes, caractérisé par le fait que l'on fait agir une quantité efficace du point de vue fongicide d'un composé de formule I selon la revendication 1 sur les matériaux, surfaces, plantes, semences menacées par une attaque de champignons ou sur les champignons eux-mêmes.

4. Agent fongicide selon la revendication 1 contenant trans-3-(4-tert.-alkyl-cyclohexyl-1)-2-méthyl-1-(N-di-n-propylamino)-propane ou son sel acceptable pour les plantes.